Europäisches Patentamt

(19) European Patent Office

Office européen des brevets

(11) Publication number: **O 032 265**
**B1**

(12) **EUROPEAN PATENT SPECIFICATION**

(45) Date of publication of patent specification: **18.07.84**

(21) Application number: **80201222.9**

(22) Date of filing: **19.12.80**

(51) Int. Cl.³: **E 21 B 17/043**

(54) Coupling for interconnecting pipe sections, and pipe section for well drilling operations.

(30) Priority: **11.01.80 GB 8000989**

(43) Date of publication of application:
**22.07.81 Bulletin 81/29**

(45) Publication of the grant of the patent:
**18.07.84 Bulletin 84/29**

(84) Designated Contracting States:
**AT DE FR GB IT**

(56) References cited:
**BE - A - 520 079**
**FR - A - 2 379 011**
**US - A - 1 781 091**
**US - A - 2 239 942**
**US - A - 3 037 797**

(73) Proprietor: **SHELL INTERNATIONALE RESEARCH**
**MAATSCHAPPIJ B.V.**
**Carel van Bylandtlaan 30**
**NL-2596 HR Den Haag (NL)**

(72) Inventor: **Zijlstra, Kornelis Nanno**
**66 Abbotshall Drive Cults**
**Aberdeen (GB)**

(74) Representative: **Puister, Antonius Tonnis, Mr. et al,**
**P.O. Box 302**
**NL-2501 CH The Hague (NL)**

Courier Press, Leamington Spa, England.

## Description

The invention relates to a coupling for interconnecting pipe sections for well drilling operations, comprising a pin element and a box element with longitudinal axes, the elements being provided with co-operating conical screw threads. Furthermore, the invention relates to a pipe section provided with a pin element and a box element with conical screw threads for co-operation with a box element and a pin element, respectively, of adjacent pipe sections.

The pipe strings as applied in well drilling operations usually consist of a plurality of pipe sections connected together in an end-to-end relationship by the above-mentioned type of screw thread couplings. Such pipe strings are often subjected to large axial and/or lateral impacts. Large axial impacts, for example, will happen to a conductor string when this string is driven into a subterranean formation by means of a pile driver. Wave motions, for example, cause large lateral impacts on marine conductor strings. Such large impacts may cause unscrewing and therefore leakage of the couplings and often damage thereof.

A pipe string consisting of pipe sections provided with conical screw thread couplings of the above-mentioned type is disclosed in US patent specification 2,239,942. The terminal ends of the pin elements disclosed in this document are each provided with a resilient lip to increase the resistance to accidental unscrewing of the couplings. The resilient lip is formed by cutting an annular groove in the inner surface of the pin element near the terminal end thereof. Since the resistance against unscrewing of the coupling, however, is still unsatisfactory when the pipe string is subjected to large impacts the coupling does not adequately secure the coupled pipe sections against unscrewing when large impacts are exerted thereon.

An object of the present invention is to provide a coupling of the above-mentioned type, which is secured against loosening due to large impacts exerted thereon. Another object of the invention is to provide pipe sections which may be coupled together without the risk of working loose due to such large impacts.

The coupling according to the invention is characterized in that the pin element and the box element are provided with annular locking shoulders and guiding means adjoining these shoulders, the shoulders locking the coupling in the coupled position thereof, and the guiding means co-operating with one another when the elements are screwed to coupling position to resiliently displace the locking shoulder of one element relatively to the locking shoulder of the other element in substantially radial direction with respect to the longitudinal axes of the elements, thereby allowing the locking shoulders to pass each other to the locking position thereof.

The pipe section according to the invention is at the ends thereof provided with a pin element and a box element of the coupling according to the invention.

The locking shoulders may be arranged in various ways in order to effectively lock the coupling against loosening thereof when subjected to impacts. In one arrangement, the locking shoulders are so shaped that the coupling can be broken by applying a predetermined torque thereon. However, when impacts are acting on the coupling, the shoulders remain in the locking position thereof, thereby preventing the coupling from working loose. In another arrangement the locking shoulders are arranged such that the coupling, once in the coupled position, is closed for ever and cannot be broken or unscrewed by applying torque thereon.

The invention will now be described by way of example in more detail with reference to the embodiments thereof shown in the drawings.

Figure 1 shows schematically a side view of a pipe section provided with coupling elements according to the invention.

Figure 2 shows a longitudinal section of a coupling according to the invention.

Figure 3 shows a detail III of Figure 2 on a larger scale.

Figure 4 shows an alternative of Figure 2.

Figure 5 shows detail V of Figure 4.

Figure 6 shows cross section VI—VI of the coupling shown in Figure 4.

It will be appreciated that identical elements shown in the figures are indicated by identical reference numbers.

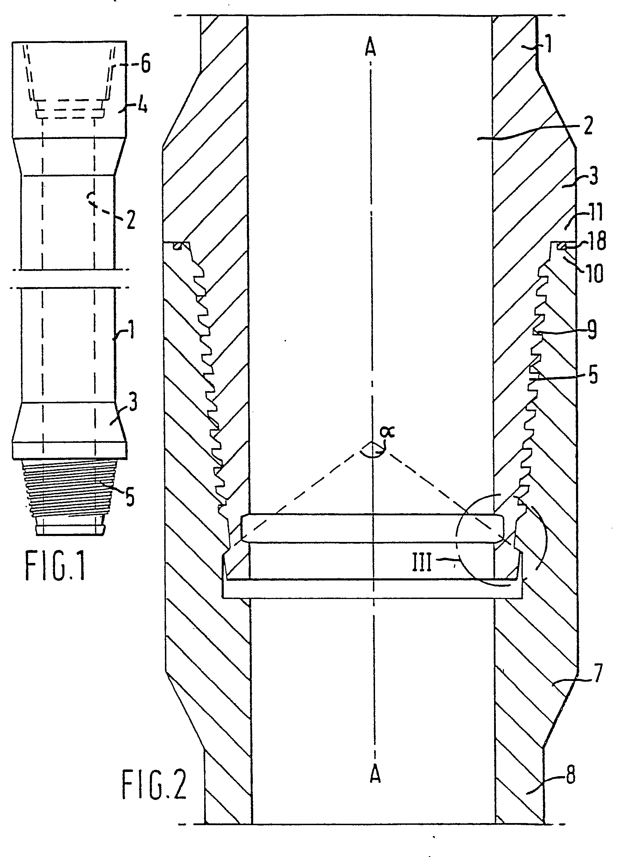

As shown in Figure 1, pipe section 1 having a throughbore 2 is provided with a pin element 3 and a box element 4. The elements 3 and 4 are provided with conical screw threads 5 and 6, respectively, for co-operation with adjoining identical pipe sections (not shown).

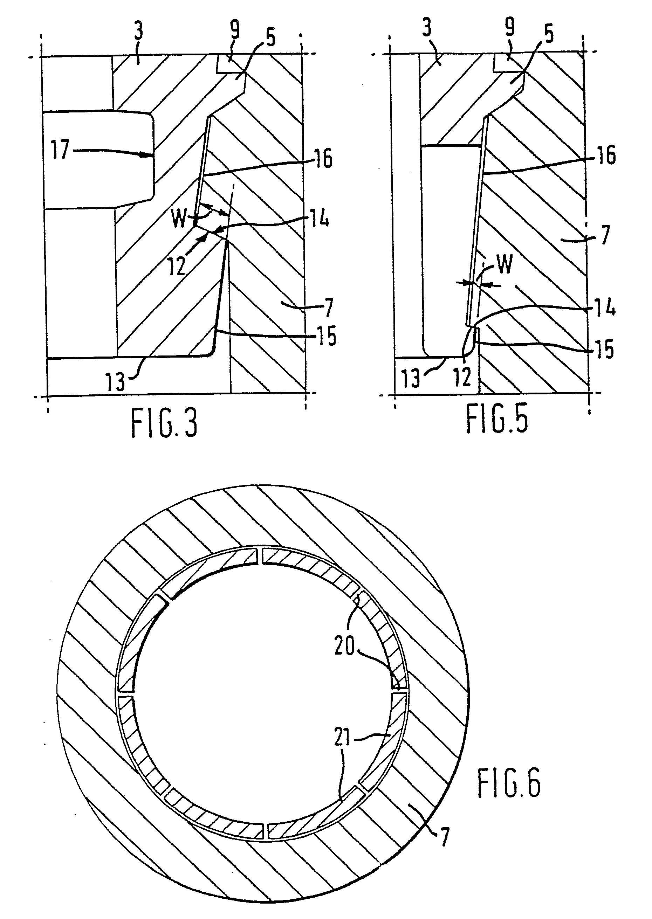

Figure 2 shows pin element 3 of Figure 1 on a larger scale and in coupled position with a box element 7 of an adjoining pipe section 8. Box element 7 is provided with a conical screw thread 9 and with an end shoulder 10 carrying an annular sealing ring 18, the shoulder and ring co-operating with an end shoulder 11 of the pin element 3 in the shown coupled position. As shown in Figure 3 (which shows detail III of Figure 2 on a larger scale), pin element 3 is provided with an annular locking shoulder 12 arranged between the pin screw thread 5 and the free end 13 of pin element 3. Locking shoulder 12 co-operates in the shown coupled position with an annular locking shoulder 14 arranged on the box element 7. The locking shoulders 12 and 14 are conically shaped and are each formed by part of the surface of a cone having an apex with an angle $\alpha$ (see Figure 2) positioned on the coinciding longitudinal axes A—A of the pin and box elements, and pointing away from the free end 13 of the pin element 3 in the shown coupled position. In Figure 3, the width of the overlapping part of the locking shoulders 12 and 14 in the coupled position is indicated by "w".

The locking shoulders 12 and 14 adjoin guiding means 15 and 16 respectively. These guiding means 15 and 16 are conically shaped and are each formed by part of the surface of a cone having an apex (not shown) on the coinciding longitudinal axes A—A of the coupled pin and box elements.

The inner wall of pin element 3 is furthermore provided with an annular groove 17 that allows flexion of the building means 15 as will be explained in more detail hereinafter.

The operation of the coupling as shown in Figures 2 and 3 will now be described.

For making up the coupling, the pin element 3 is stabbed into the box element 7 until the lower end of screw thread 5 of the pin element 3 engages screw thread 9 of the box element 7, whereupon the pin element 3 is rotated to screw the elements 3 and 7 together. When the guiding surface 15 of pin element 3 contacts guiding surface 16, further rotation will cause guiding surface 15 and consequently locking shoulder 12 to flex inwardly for passing through the bore of the guiding surface 16 of the box element 7. This inward flexion is enabled by the presence of annular groove 17.

After the locking shoulder 12 has passed through the bore of the guiding surface 16 and locking shoulder 14, locking shoulder 12 and guiding surface 15 retain their original position, in which position the shoulder 12 mates with the locking shoulder 14. The end shoulders 10 and 11 are so arranged that as soon as the locking shoulder 12 comes in contact with the locking shoulder 14, the end shoulders 10 and 11 will engage each other tightly, in which position sealing ring 18 will avoid leakage of the coupling.

In the embodiment of the coupling shown in Figures 2 and 3, the apex angle of the conically shaped locking shoulders 12 and 14 is so chosen that the coupling is locked against loosening by impacts exerted thereon, but can still be broken (if required) by exerting a predetermined torque on one of the elements (such as the pin element) whilst the other element is held against rotation. The conical screw thread 5 will then exert an upwardly directed force on the locking shoulder 12 of the pin element 3. Due to the conical shape of the locking shoulders 12 and 14, this upwardly directed force will cause locking shoulder 12 to slide over locking shoulder 14 whereby the shoulder 12 and the adjoining guiding surface 15 are flexed inwardly with respect to the bore of the pin element. On continued exertion of the torque on the pin element, shoulder 12 and guiding surface 15 will pass through the bore of the conically shaped guiding surface 16 of the box element 7 and subsequently through the conical screw thread 9 of the box element 7, thereby leaving the box element 7.

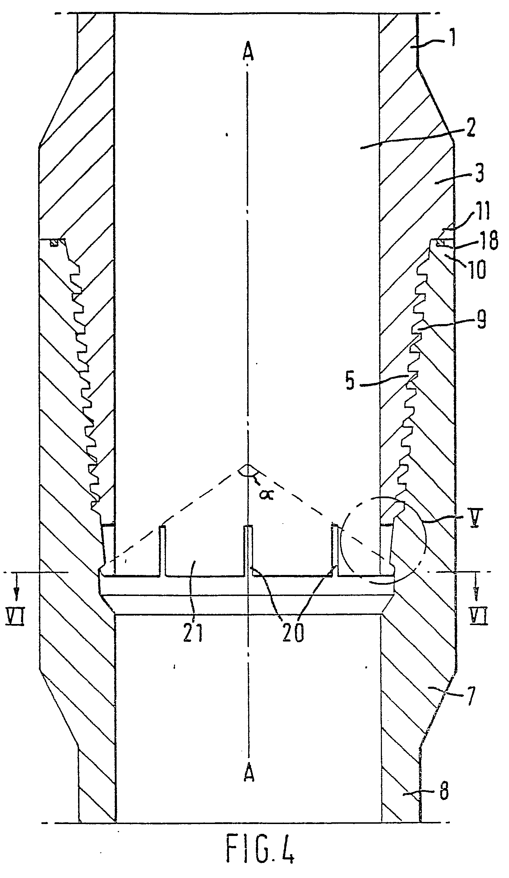

Figures 4—6 show an alternative of the coupling shown in Figures 2 and 3. This alternative embodiment of the invention is provided with a number of slits 20, instead of with the annular groove 17 as shown in Figures 2 and 3. The slits 20 are so arranged that they divide the lower end of pin element 3 into a number of extensions 21 each carrying part of the locking shoulder 12 and part of guiding surface 15 of the pin element 3. The slits 20 run substantially parallel to the longitudinal axis A—A of the pin element 3, and pass through the locking shoulder 12 thereof, thereby allowing the guiding surface 15 and locking shoulder 12 to flex inwardly for passing over the guiding surface 16 during the coupling or uncoupling operation, which takes place in the same manner as described with reference to the coupling shown in Figures 2 and 3.

It will be appreciated that in the shown couplings the apex angle $\alpha$ may be chosen from a wide range of apex angles to obtain locking of the coupling against impacts but simultaneously allowing breaking of the coupling by exerting a predetermined torque thereon. A suitable range of apex anges $\alpha$ is between 50 and 150 degrees.

By arranging the locking shoulders 12 and 14 in a plane substantially perpendicular to the central axis A—A, a coupling is obtained which, in the coupled position, is closed for ever, and cannot be broken by exerting torque thereon. When trying to break such a coupling by exerting torque thereon the force exerted by the screw threads on the locking shoulder of the pin element has no component along that locking shoulder in the direction of the axis A—A. As a consequence thereof the locking shoulder remains in its locking position.

Further it will be appreciated that the width w (see Figures 3 and 5) depends upon a number of factors, such as the resiliency of the material of the pin element, the dimensions of the elements, and the required resistance against axial impacts. A suitable range of values from which the width w may be chosen is between 0.2 and 1.5 mm.

The invention is not restricted to the application of a single pair of locking shoulders, although in the majority of cases a single pair will be sufficient for the purpose of locking the coupling against loosening when impacts are exerted thereon.

Also, the invention is not restricted to couplings having locking shoulders arranged between the co-operating conical screw threads and the free end of the pin element in the coupled position thereof. An arrangement wherein the coupling has locking shoulders in the coupled position thereof arranged between the co-operating conical screw threads 5 and 9 and the end shoulders 10 and 11 (see Figure 2) may also be applied advantageously.

If desired, the pin element may be provided with an annular groove 17 (see Figure 3) in combination with slits 20 (see Figure 4) for obtaining the desired resiliency of the pin element. It will be appreciated that in the case where the pin element and/or the box element are sufficiently resilient for the purpose, the annular groove and/or the slits may be omitted.

The end shoulders 10 and 11 and sealing ring 18, shown in Figures 2 and 4, may be replaced by other suitable sealing members known per se and are therefore not described in detail.

## Claims

1. Coupling for interconnecting pipe sections for well drilling operations, comprising a pin element (3) and a box element (7) with longitudinal axes, the elements being provided with co-operating conical screw threads (5, 9), characterized in that the pin element (3) and the box element (7) have annular locking shoulders (12, 14) and guiding means (15, 16) adjoining these shoulders, the shoulders locking the coupling in the coupled position thereof, and the guiding means co-operating with one another when the elements are screwed to coupling position to resiliently displace the locking shoulder (12) of one element relatively to the locking shoulder (14) of the other element in substantially radial direction with respect to the longitudinal axes of the elements, thereby allowing the locking shoulders to pass each other to the locking position thereof.

2. Coupling according to claim 1, wherein the guiding means (15, 16) of the pin element (3) and the box element (7) are each formed by part of the surface of a cone having an apex positioned on the longitudinal axis of the pin element and the box element, respectively.

3. Coupling according to claim 1 or 2, wherein the annular locking shoulders (12, 14) of the pin element (3) and the box element (7) are each formed by part of the surface of a cone having an apex positioned on the longitudinal axis of the pin element and the box element, respectively.

4. Coupling according to claim 3, wherein the apices of the cones of the annular locking shoulders (12, 14) point away from the free end of the pin element in the locking position of the locking shoulders, and the apex angles of said cones are between 50 and 150 degrees.

5. Coupling according to claim 1 or 2, wherein the annular locking shoulders (12, 14) are arranged in planes perpendicular to the longitudinal axes of the elements.

6. Coupling according to any one of the claims 1—5, wherein the width (w) of the overlapping part of the annular locking shoulders in the locking position is between 0.2 and 1.5 mm.

7. Coupling according to any one of the claims 1—6, wherein the annular locking shoulder (12) of the pin element (3) is arranged between the conical screw thread (5) and the free end (13) of the pin element.

8. Coupling according to any one of the claims 1—7, wherein the inner surface of the pin element (3) is provided with an annular groove (17) enabling the locking shoulder (12) of the pin element on the outer surface thereof to be resiliently displaced towards the longitudinal axis of the pin element.

9. Coupling according to any one of the claims 1—8, wherein the end (13) of the pin element (3) is provided with slits (20) running substantially parallel to the longitudinal axis of the pin element, the slits passing through the locking shoulder (12) of the pin element.

10. Pipe section for use in well drilling operations, provided at the ends thereof with a pin element (3) and a box element (7) of the coupling according to any one of the preceding claims.

## Revendications

1. Raccord conçu pour accoupler des tronçons de tube utilisés pour des opérations de forage, qui comprend un élément mâle (3) et un élément femelle (7) ayant des axes longitudinaux, les éléments étant munis de filets de vis coniques coopérants (5, 9) caractérisé en ce que l'élément mâle (3) l'élément femelle (7) sont munis d'épaulements de verrouillage annulaires (12, 14) et de moyens de guidage (15, 16) contigus à ces épaulements, les épaulements verrouillant le raccord dans sa position accouplée, et les moyens de guidage coopérant entre eux, lorsque les éléments sont vissés jusqu'à la position d'accouplement, pour déplacer élastiquement l'épaulement de verrouillage (12) d'un élément par rapport à l'épaulement de verrouillage (14) de l'autre élément dans une direction sensiblement radiale par rapport aux axes longitudinaux des éléments, permettant ainsi aux épaulements de verrouillage de paser l'un au-delà de l'autre jusqu'à leur position de verrouillage.

2. Raccord selon la revendication 1, dans lequel les moyens de guidage (15, 16) de l'élément mâle (3) et de l'élément femelle (7) sont tous deux formés par une partie de la surface d'un cône dont le sommet est positionné sur l'axe longitudinal de l'élément mâle et, respectivement, de l'élément femelle.

3. Raccord selon la revendication 1 ou 2, dans lequel les épaulements de verrouillage annulaires (12, 14) de l'élément mâle (3) et de l'élément femelle (7) sont tous deux formés par une partie de la surface d'un cône dont le sommet est positionné sur l'axe longitudinal de l'élément mâle et respectivement, de l'élément femelle.

4. Raccord selon le revendication 3, dans lequel les sommets des cônes des épaulements de verrouillage annulaires (12, 14) song dirigés en éloignement de l'extrémité libre de l'élément mâle dans la position de verrouillage des épaulements de verrouillage et les angles au sommet desdits cônes sont compris entre 50 et 150 degrés.

5. Raccord selon la revendication 1 ou 2, dans lequel les épaulements de verrouillage annulaires (12, 14) sont disposés dans des plans perpendiculaires aux axes longitudinaux des éléments.

6. Raccord selon l'une quelconque des revendications 1 à 5, dans lequel la largeur (w) de la partie de chevauchement des épaulements de verrouillage annulaires dans la position de verrouillage est comprise entre 0,2 et 1,5 mm.

7. Raccord selon l'une quelconque des revendications 1 à 6, dans lequel l'épaulement de verrouillage annulaire (12) de l'élément mâle (3) est disposé entre le filet de vis conique (5) et l'extrémité libre (13) de l'élément mâle.

8. Raccord selon l'une quelconque des revendications 1 à 7, dans lequel la surface intérieure de l'élément mâle (3) est munie d'une rainure annulaire (17) qui permet à l'épaulement de verrouillage (12) formé sur la surface extérieure de l'élément mâle d'être élastiquement déplacé en direction de l'axe longitudinal de l'élément mâle.

9. Raccord selon l'une quelconque des revendications 1 à 8, dans lequel l'extrémité (13) de l'élément mâle (3) est munie de fentes (20) qui s'étendent sensiblement parallèlement à l'axe longitudinal de l'élément mâle, les fentes traversant l'épaulement de verrouillage (12) de l'élément mâle.

10. Tronçon de tube conçu pour être utilisé dans des opérations de forage de puits, muni à ses extrémités d'un élément mâle (3) et d'un élément femelle (7) du raccord selon l'une quelconque des revendications précédentes.

**Patentansprüche**

1. Kupplung zum verbinden von Rohrteilstücken für Tiefbohrarbeiten, mit einem Bolzenelement (3) und einem Gehäuseelement (7), die Längsachsen aufweisen, wobei die Elemente mit zusammenwirkenden konischen Schraubgewinden (5, 9) versehen sind, dadurch gekennzeichnet, daß das Bolzenelement (3) und das Gehäuseelement (7) ringförmige Verriegelungsschultern (12, 14) und an diese anschließende Führungseinrichtungen (15, 16) aufweisen, wobei die Schultern die Kupplung in der gekuppelten Stellung derselben verriegeln, und die Führungseinrichtungen zusammenwirken, wenn die Elemente in die Kupplungsstellung geschraubt werden, um die Verriegelungsschulter (12) des einen Elementes relativ zur Verriegelungsschulter (14) des anderen Elementes in im wesentlichen radialer Richtung bezüglich der Längsachsen der Elemente elastisch zu verlagern, so daß die Verriegelungsschultern einander auf dem Weg zur Verriegelungsstellung passieren können.

2. Kupplung nach Anspruch 1, dadurch gekennzeichnet, daß die Führungseinrichtungen (15, 16) des Bolzenelementes (3) und des Gehäuseelementes (7) je durch einen Teil der Oberfläche eines Kegels gebildet sind, dessen Scheitel auf der Längsachse des Bolzenelementes bzw. des Gehäuseelementes liegt.

3. Kupplung nach Anspruch 1 oder 2, dadurch gekennzeichnet, daß die ringförmigen Verriegelungsschultern (12, 14) des Bolzenelementes (3) und des Gehäuseelementes (7) je durch einen Teil der Oberfläche eines Kegels gebildet sind, dessen Scheitel auf der Längsachse des Bolzenelementes bzw. des Gehäuseelementes liegt.

4. Kupplung nach Anspruch 3, dadurch gekennzeichnet, daß die Scheitel der Kegel der ringförmigen Verriegelungsschultern (12, 14) vom freien Ende des Bolzenelementes in der Verriegelungsstellung der Verriegelungsschultern weg weisen, und daß die Scheitelwinkel der Kegel zwischen 50 und 150° betragen.

5. Kupplung nach Anspruch 1 oder 2, dadurch gekennzeichnet, daß die ringförmigen Verriegelungsschultern (12, 14) in Ebenen senkrecht zu den Längsachsen der Elemente liegen.

6. Kupplung nach einem der Ansprüche 1 bis 5, dadurch gekennzeichnet, daß die Breite (w) des Überlappungsabschnittes der ringförmigen Verriegelungsschultern in der Verriegelungsstellung zwischen 0,2 und 1,5 mm beträgt.

7. Kupplung nach einem der Ansprüche 1 bis 6, dadurch gekennzeichnet, daß die ringförmige Verriegelungsschulter (12) des Bolzenelementes (3) zwischen dem konischen Schraubgewinde (5) und dem freien Ende (13) des Bolzenelementes angeordnet ist.

8. Kupplung nach einen der Ansprüche 1 bis 7, dadurch gekennzeichnet, daß die Innenfläche des Bolzenelementes (3) mit einer Ringnut (17) versehen ist, die es der auf der Außenseite des Bolzenelementes vorgesehenen Ringschulter (12) desselben ermöglicht, zur Längsachse des Bolzenelementes hin elastisch verlagert zu werden.

9. Kupplung nach einem der Ansprüche 1 bis 8, dadurch gekennzeichnet, daß das Ende (13) des Bolzenelementes (3) mit Schlitzen (20) versehen ist, die im wesentlichen parallel zur Längsachse des Bolzenelementes verlaufen, wobei die Schlitze die Verriegelungsschulter (12) des Bolzenelementes durchsetzen.

10. Rohrteilstück zur Verwendung bei Tiefbodenarbeiten, das an seinen Enden mit einem Bolzenelement (3) und einem Gehäuseelement (7) der Kupplung nach einem der vorhergehenden Ansprüche versehen ist.

FIG.1

FIG.2

FIG.3

FIG.5

FIG.6

2

FIG. 4